# EUROPEAN PATENT APPLICATION

(11) **EP 4 538 923 A1**
(43) Date of publication of application: **16.04.2025**
(21) Application number: 23214504.5
(22) Date of filing: 06.12.2023
(51) Int. Cl.: G06F 30/23, G06F 30/28, G06F 30/367, G06F 119/06, G06F 119/08

(54) **METHOD OF DETERMINING THERMAL BEHAVIOR OF A POWER ELECTRONICS DEVICE**

(30) Priority: 10.10.2023 AT 5015023 U
(71) Applicant: Tridonic GmbH & Co. KG, 6851 Dornbirn (AT)
(72) Inventor: Vukovic, Dusko, 6851 Dornbirn (AT); Mayrhofer, Markus, 6851 Dornbirn (AT); Zengerle, Thomas, 6851 Dornbirn (AT)
(74) Representative: Rupp, Christian

(57) **Abstract**

The invention relates to a method (10) of determining thermal behavior of a power electronics device, such as an LED driver. The method (10) comprises: generating (11) a number of virtual models (30) of the power electronics device, wherein each virtual model (30) comprises: a single heat source (31) which represents all heat-generating sources of the power electronics device, and a number of thermal resistors which are connected to the heat source (31), and which represent thermal connections of components of the power electronics device to each other and/or to a housing (32) of the power electronics device. The method (10) further comprises performing (13) a number of thermal simulations with the virtual models (30) to determine thermal parameters of a network model of the power electronics device.

## Description

### TECHNICAL FIELD OF THE INVENTION

The invention relates to thermal modelling of power electronic devices, such as LED drivers.

### BACKGROUND OF THE INVENTION

Thermal models of electronic LED drivers can be used in the fields of driver design (e.g., during driver development) and luminaire integration.

For driver design, sophisticated thermal models are often required to enable accurate and precise temperature predictions. In many cases, the models are part of a finite-element (FEM) or computational fluid dynamic (CFD) simulation environment. Developing such models is highly complex and time-consuming, and the computational resources for running such simulations can be large.

For the integration of a driver into a lighting-structure, it is important to know the thermal behavior of the driver and the mutual impact of the driver and its surrounding elements of the lighting system. Using a complex full-scale model of the driver within a larger simulation-environment, which comprises also a significant number of other elements (e.g., LED-modules, luminaire-components or fixings) will strongly increase the computational expenses. Thus, an intended speed-benefit of the virtual model can be lost.

Thus, it is an objective of the invention to provide an improved method of determining thermal behavior of a power electronics device, which avoids the above-mentioned disadvantages.

### SUMMARY OF THE INVENTION

The object of the present invention is achieved by the solution provided in the enclosed independent claims. Advantageous implementations of the present invention are further defined in the dependent claims.

According to a first aspect, the invention relates to a method of determining thermal behavior of a power electronics device, such as an LED driver. The method comprises the step of: generating a number of virtual models of the power electronics device, wherein each virtual model comprises: a single heat source which represents all heat-generating sources of the power electronics device, and a number of thermal resistors which are connected to the heat source, and which represent thermal connections of components of the power electronics device to each other and/or to a housing of the power electronics device. The method comprises the further steps of: performing a number of thermal simulations with the virtual models to determine thermal parameters of a network model of the power electronics device.

This achieves the advantage that the power electronics device can be modelled in a simplified and compact way, approximating the overall thermal behavior of the device while neglecting many internal details, such as individual temperatures of each internal structures and components of the device. The determined thermal parameters can represent thermal properties and/or parameters of the power electronics device.

In particular, the thermal simulation of the virtual models pertain to a simulation of a technical object, namely the power electronics device. For instance, the simulation results can be used by a technical engineer to adapt the power electronics device or a system in which the device is integrated (e.g., adapt the device to avoid overheating). The simulation results can further be used during a development process of the power electronics device to adapt the design of the device, e.g. as an alternative or preliminary step to using a prototype device.

Thus, the method may constitute an essential part of a developing and manufacturing process of the power electronics device which precedes a production process. Therefore, the method has a technical effect even if it does not yet comprise the final material product of the power electronics device.

The power electronics device which is modelled comprises the housing and the components. The components can be internal elements of the device which generate and/or dissipate heat when the device is in operation, e.g. by means of conduction, radiation and/or convention.

The number of virtual models can comprise one or more virtual models. The respective thermal simulation can be performed with each of the one or more virtual models.

For instance, the thermal parameters can be values of the thermal resistors in the virtual model(s) (e.g., in Kelvin / Watt). By performing the thermal simulation(s), suitable parameter values of the resistors can be determined. In this way, a parameterization of the virtual model(s) can be carried out. The thermal resistors can be simulated as thermal connections in the thermal simulations.

The virtual models can further comprise the housing or housing elements of the power electronics device and/or a heat sink connected to the housing or housing element. The housing elements can be thermally connected or separated, depending on the virtual model.

The network model can be generated based on the thermal simulations with the virtual models. The network model can be a model which represents the power electronics device.

In an embodiment, the method comprises: inserting the thermal parameters in the network model of the power electronics device.

The network model can be represented by a circuit diagram which comprises the thermal resistors, the heat source and interconnections between the thermal resistors.

The network model in which most or all thermal parameters (e.g., resistor values) are inserted, can accurately depict the thermal behavior of the power electronics device. Such a model can be integrated in bigger thermal models which comprise additional heat sources (e.g., LED elements).

In an embodiment, the thermal simulations comprise finite element simulations and/or computational fluid dynamics simulations.

In an embodiment, at least one of the virtual models is configured to take a heat dissipation from the housing into a surrounding medium into account.

For instance, the heat dissipation is modelled by dedicated thermal resistors in the virtual model and/or in the network model. The surrounding medium is typically air.

In an embodiment, at least one of the virtual models is configured to neglect some or all indirect heat flows, such as heat flows between different sides of the housing, of the power electronics device.

For instance, such a model does not comprise dedicated thermal resistors and/or interconnections between thermal resistors which model such heat flows. The housing sides may be embodied as heat-sinks in the model(s).

For example, in at least one of the virtual models, the housing is modelled to be partially thermally isolated. For instance, at least one side or element of the housing is thermally isolation from the remaining sides or elements.

In an embodiment, at least one of the virtual models is configured to take a heat flow on at least one side of the housing of the power electronics device into account. For example, the heat flow is modelled by additional interconnections and/or thermal resistors in the virtual model and/or the network model.

In an embodiment, a number of consecutive thermal simulations is performed with different virtual models of the total number of virtual models.

In an embodiment, during each of the consecutive thermal simulations, a different thermal parameter, for example a different value of a thermal resistor, is determined.

This achieves the advantage that the virtual model(s) and/or the network model can be parameterized efficiently. In particular, all thermal parameters for the network model can be determined.

The virtual models used in the consecutive simulations can build on each other. For instance, a virtual model used in a simulation can be based on a model used in a previous simulation and can comprises one or more additional thermal resistors. During a simulation, the thermal parameter of the already determined resistors can be inserted in the model and the thermal parameters of the added resistor(s) can be determined.

In an embodiment, the method further comprises: inserting the virtual models in a virtual environment which comprises further heat dissipating and/or generating components; wherein the number of thermal simulations is performed with the virtual environment.

In other words, the generated virtual models can be used in the virtual environment to perform the number of thermal simulations and determine thermal parameters.

This achieves the advantage that the influence of a larger environment (e.g., additional heat sources) on the thermal parameters can be taken in to account.

In an embodiment, the virtual environment comprises a thermal model of a lighting infrastructure and/or an application environment of a luminaire which comprises the power electronics device.

According to a second aspect, the invention relates to a computer program comprising instructions which, when the program is executed by a computer, cause the computer to perform the method according to first aspect of the invention.

### BRIEF DESCRIPTION OF THE DRAWINGS

The invention will be explained in the followings together with the figures.
- Fig. 1: shows a flow diagram of a method of determining thermal behavior of a power electronics device according to an embodiment;
- Fig. 2: shows a schematic view of a power electronics device according to an embodiment;
- Figs. 3A-C: show virtual models of a power electronic device according to an embodiment; and
- Figs. 4A-B: show circuit diagrams of network models according to an embodiment.

### DETAILED DESCRIPTION OF THE PREFERRED EMBODIMENTS

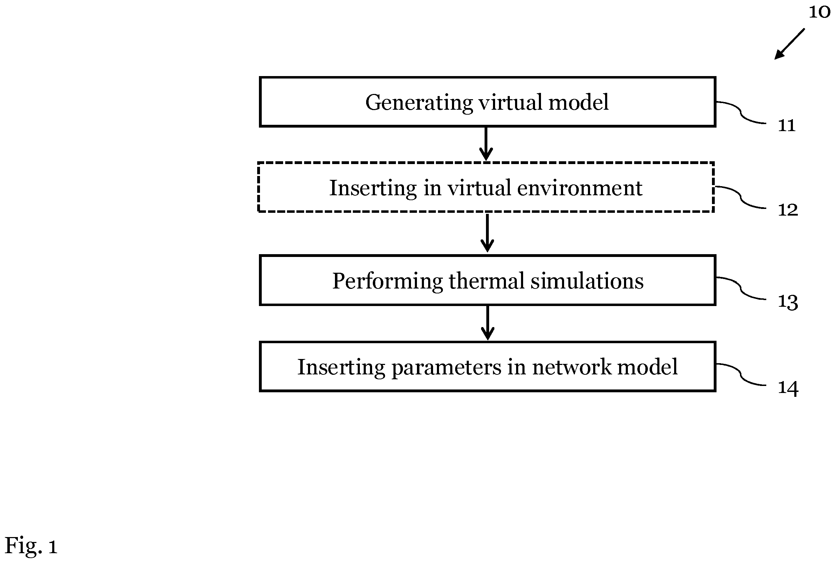

Fig. 1 shows a flow diagram of a method 10 of determining thermal behavior of a power electronics device in an embodiment.

The method 10 comprises the steps of: generating 11 a number of virtual models of the power electronics device, wherein each virtual model comprises: all heat-generating sources of the power electronics device represented by a single heat source (Q_{Source}), and some or all thermal connections of components of the power electronics device to each other and/or to a housing of the power electronics device represented by a number of thermal resistors which are connected to the single heat source; and performing 13 a number of thermal simulations with the virtual models to determine thermal parameters of the network model representing the power electronics device..

The method 10 may comprise the further step of inserting 14 the thermal parameters in the network model of the power electronics device.

The virtual models can be FEM or CFD models (i.e, models suitable for such simulations). Accordingly, the thermal simulations can be FEM or CFD simulations.

The network model can be modelled by a circuit diagram which comprises the thermal resistors, the heat source and interconnections between the thermal resistors.

The method 10 can be a simulation method. The steps 11-14 of the method can be carried out by a computer or other processing unit.

For example, the thermal resistors in the virtual model and/or network model can represent some or all real thermal connections (e.g., conducting, radiating and/or convecting) from the components of the power electronics device to the surfaces of its housing. These thermal connections can also be represented by the specific arrangement of the individual thermal resistors.

Each thermal parameter can be a respective value of one of the thermal resistors (e.g., in Kelvin / Watt). In particular, determining the thermal parameters via thermal simulations and inserting them in the network model can be referred to as parameterization of the model.

For instance, when (virtually) designing a new power electronics device, a network model which represents the new device can be parameterized using the method 10.

From the resulting fully parameterized network model, various thermal characteristics of the device can be derived. At the same time, the network model is "light weight" and does not require much computational power when being simulated (e.g., as part of a larger simulation environment).

As shown in Fig. 1, the method 10 can comprise the further optional step of: inserting 12 the virtual models in a virtual environment which comprises further heat dissipating and/or generating components, such as LED light source PCBs. The respective thermal simulations can then be performed with the virtual models in the virtual environment.

For instance, the power electronics device which is modelled by the virtual models and/or network model can be a LED driver. The virtual environment can comprise a model of a lighting infrastructure and/or an application environment of a luminaire which comprises the power electronics device.

The thermal characteristics (e.g., flows) of the LED driver may change when the driver is arranged in another environment, especially a luminaire. To take this into account, the virtual model(s) and/or network model(s) can be integrated as a thermal sub-model(s) in the virtual environment, e.g. the thermal simulation of a luminaire or lighting infrastructure. Depending on the application scenario of the LED driver, the thermal characteristics may change, e.g., depending on the distance to the housing of the luminaire, it's geometry and mounting, and active or passive heat dissipation means of the luminaire etc. This can influence the results of the thermal simulations in the virtual environment (i.e., the determined thermal parameters).

The resulting network model can then depict the thermal behavior of the power electronics device with sufficient precision in a situation where it is connected with other thermal models of structural elements (e.g., of a surrounding lighting-system, such as luminaire case, fixtures, LED-modules, structural elements, thermal heat sinks, etc.). Thus, it might not be necessary to perform highly detailed FEM or CFD simulations of the environment to assess its influence on the power electronics device.

To arrive at the parameter values of the network model, a plurality of thermal simulations can be carried out with different virtual models. Thereby, each virtual model can be a specifically created FEM or CFD model. By performing a number of simulations with different models, the contribution of the individual network-components (e.g., the individual thermal resistors) can be isolated.

This is possible, even if the elements, components and structures of the LED driver are randomly distributed in the space within the driver, and their relative contribution of heat transfer at their respective location is not known with spatial resolution. In the virtual models, all heat dissipating elements can be comprised into one virtual heat source, and all thermal pathways between the elements of the LED driver, and from those elements towards a housing structure and further into free air can be represented by a set of thermal resistances arranged in a dedicated fashion to depict direct and indirect interactions.

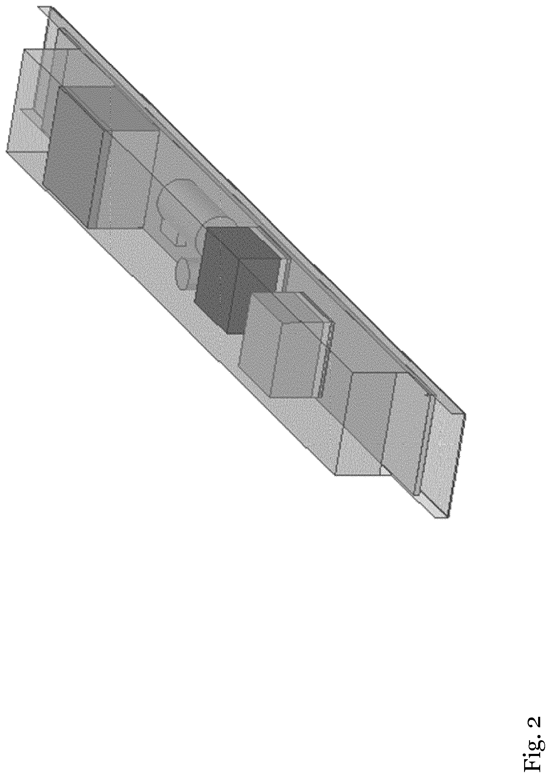

For instance, Fig. 2 shows a realistic representation of a power electronics device in the form of an LED driver in a thermal simulation.

Such a LED driver typically comprises various components which generate, dissipate and/or conduct heat when the driver is in operation. For instance, the components can comprise (elements of) a PCB, circuit elements or a control unit (e.g., an integrated circuit). In particular, heat generating sources of an LED driver can comprise an internal power converter or an integrated circuit.

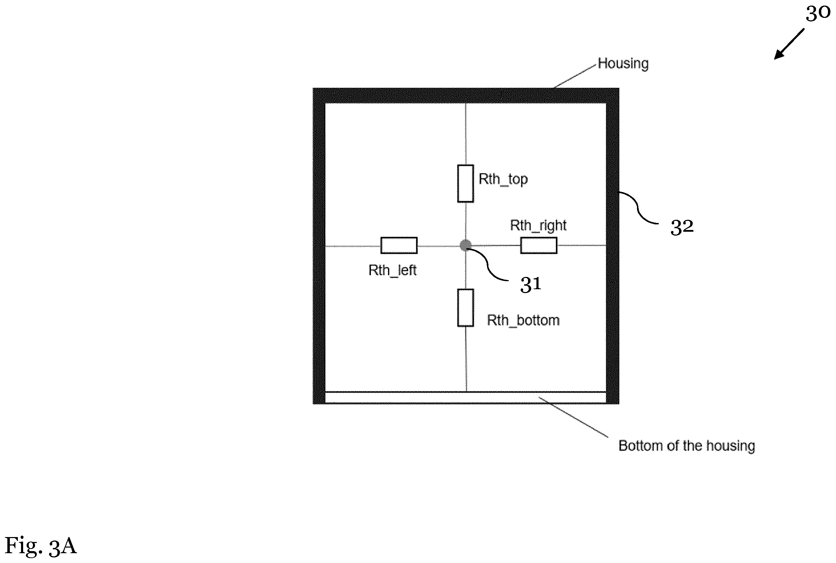

Fig. 3A shows an example of a virtual model of this driver and its possible representation by thermal equivalent resistors Rth_left, Rth_top, Rth_right, Rth_bottom in a (simplified) network model, according to an embodiment.

The virtual model 30 can be generated by dissecting the detailed representation into a number of thermal resistors Rth_left, Rth_top, Rth_right, Rth_bottom which are connected between a single heat source 31 and the housing 32 of the LED driver. Each thermal resistors in Fig. 3A represents a thermal connection between the heat source 31 and one of the housing elements (left side, top side, right side, and bottom side).

To determine the thermal parameters, a number of consecutive thermal simulations can be performed with different virtual models. During each consecutive simulation, a different thermal parameter (or different parameters), for example a different value of a thermal resistor, can be determined.

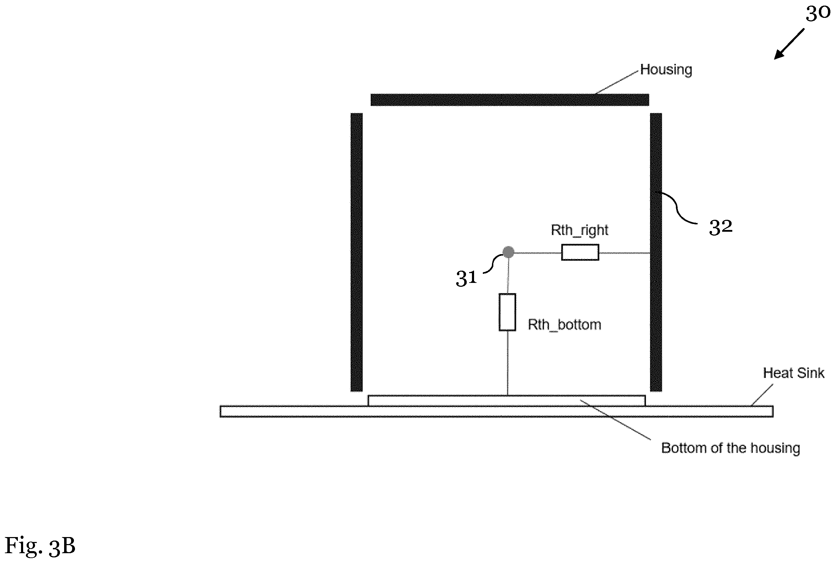

For example, a first thermal simulation can be performed with the virtual model shown in Fig. 3B.

The virtual model shown in Fig. 3B can be a nonrealistic representation of a generic LED driver for an FEM thermal simulation. In this model, all sides of the housing of the LED driver are intentionally thermally isolated from each other. This prevents any heat flow alongside the housing sides, thus enabling to evaluate only the direct heat-flow and thermal resistances of the independent pathways within the driver to each side of the driver housing. For example, when performing a thermal simulation with this virtual model, the thermal parameters Rth_right and Rth_bottom can be determined.

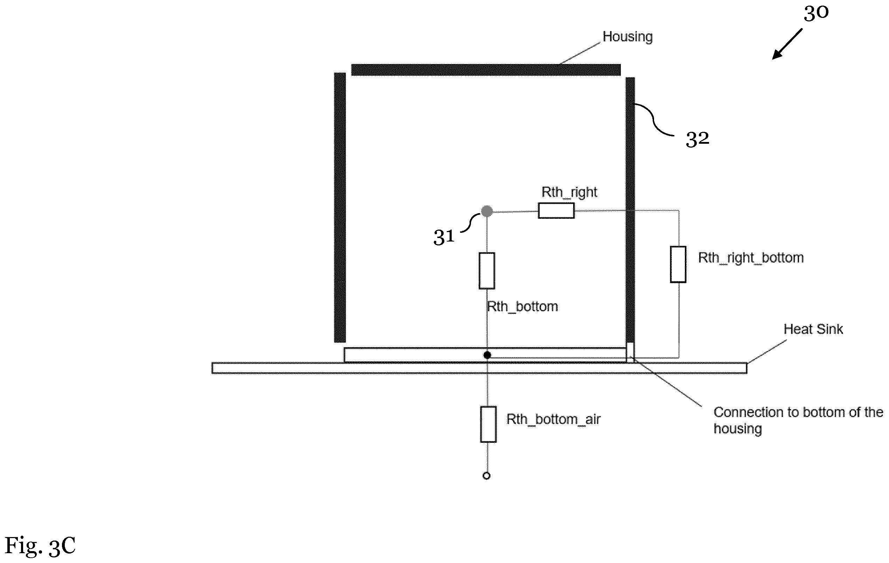

Fig. 3C shows a further virtual model. In this virtual model some sides of the driver housing are thermally isolated from each other, while others are thermally connected. Together with calculations and results from the previous arrangement (Fig. 3B), the values of the remaining thermal parameters (I.e., thermal resistances representing a heat-flow from one given driver-side to any connecting driver-side) in the model can be determined.

Further simulation can be carried out with more complex virtual models that e.g. consider a heat flow between all adjacent housing sides of the LED driver and/or that additionally consider heat dissipation from the housing into the surrounding air.

While the virtual models 30 shown in Figs. 3A-C are 2D models, also 3D models can be used. In this case, for example, the housing has six sides, and the model comprises at least six thermal resistors which represent a respective thermal connection between the heat source and each side of the housing.

The virtual models can comprise FEM or CFD models. For instance, FEM is a sub-type of a - usually complex - virtual model. The network models (which are partially also drawn in Figs. 3A-C), can be simplified models derived from any type of virtual model and/or can at least partially be comprised by a virtual model.

For instance, the virtual model in Fig 3A is used as a starting point. A network model based on Fig. 3A would be incomplete, as it does not fully depict the behavior of the virtual model. The virtual models in Fig 3B and 3C show generic variations: In Fig. 3B the housing sides are deliberately isolated from each other (e.g., by some isolating "bars") to prevent heat-flow between the sides of the housing 32. As a consequence, a direct heat-flow between thermal resistances (Rthright, Rthleft, Rthbott, Rthtop) can be determined. If one or more of the "isolating bars" are again removed (Fig 3C) for variants of the virtual model, one dedicated thermal path between two selected housing sides is "re-opened", thus the related Rths between two re-connected sides can be determined specifically (in Fig 3C that would be Rth_right_bottom) This procedure can be repeated for all connections to determine the remaining interconnection Rths, which can then be inserted in a full network model.

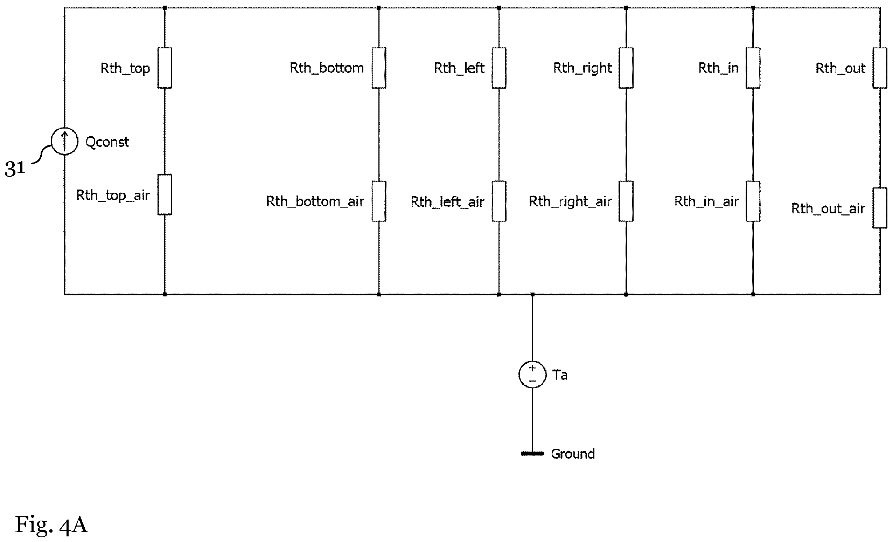

Fig. 4A shows a network model of the power electronics device according to an embodiment.

The network model comprises a circuit diagram with individual thermal resistors representing the heat flow towards the housing sides and towards the air. However, the network model in Fig. 4A neglects any heat flow along a housing of the power electronics device (as the model shown in Fig. 3B).

The thermal parameters (e.g., resistor values) which were determined with the simulations as shown in Figs. 3A-C can be inserted in the network model of Fig. 4A.

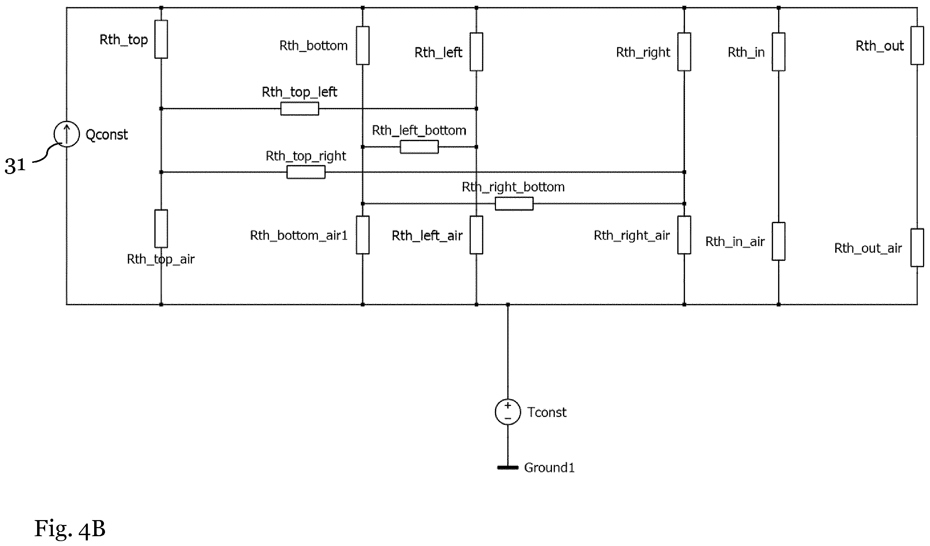

Fig. 4B shows a further network model of the power electronics device according to an embodiment. The network model shown in Fig. 4B considers heat flow along the driver housing by means of additional interconnections and thermal resistors. For instance, the values of these thermal resistors can be determined via thermal simulations using appropriate virtual models of the power electronics device.

Although the invention has been illustrated and described with respect to one or more implementations, equivalent alternations and modifications will occur to those skilled in the art upon the reading of the understanding of the specification and the annexed drawings. In addition, while a particular feature of the invention may have been disclosed with respect to only of the several implementations, such features may be combined with one or more other features of the other implementations as may be desired and advantage for any given or particular application.

## Claims

1. A method (10) of determining thermal behavior of a power electronics device, such as an LED driver, comprising:
generating (11) a number of virtual models (30) of the power electronics device, wherein each virtual model (30) comprises:
- a single heat source (31) which represents all heat-generating sources of the power electronics device, and
- a number of thermal resistors which are connected to the heat source (31), and which represent thermal connections of components of the power electronics device to each other and/or to a housing (32) of the power electronics device;
performing (13) a number of thermal simulations with the virtual models (30) to determine thermal parameters of a network model of the power electronics device.

2. The method (10) of claim 1, further comprising:
inserting (14) the thermal parameters in the network model of the power electronics device.

3. The method (10) of claim 1,
wherein the thermal simulations comprise finite element simulations and/or computational fluid dynamics simulations.

4. The method (10) of claim any one of the preceding claims,
wherein at least one of the virtual models is configured to take a heat dissipation from the housing (32) into a surrounding medium into account.

5. The method (10) of any one of the preceding claims,
wherein at least one of the virtual models (30) is configured to neglect some or all indirect heat flows, such as heat flows between different sides of the housing (32), of the power electronics device.

6. The method (10) of any one of the preceding claims,
wherein at least one of the virtual models (30) is configured to take a heat flow on at least one side of the housing (32) of the power electronics device into account.

7. The method (10) of any one of the preceding claims,
wherein a number of consecutive thermal simulations is performed with different virtual models (30) of the number of virtual models.

8. The method (10) of claim 7,
wherein during each of the consecutive thermal simulations, a different thermal parameter, for example a different value of a thermal resistor, is determined.

9. The method (10) of any one of the preceding claims, further comprising:
inserting (12) the virtual models (30) in a virtual environment which comprises further heat dissipating and/or generating components;
wherein the number of thermal simulations is performed with the virtual environment.

10. The method (10) of claim 9,
wherein the virtual environment comprises a thermal model of a lighting infrastructure and/or an application environment of a luminaire which comprises the power electronics device.

11. A computer program comprising instructions which, when the program is executed by a computer, cause the computer to perform the method according to any one of the preceding claims.
